# EUROPEAN PATENT SPECIFICATION

(11) **EP 1 133 350 B1**
(45) Date of publication and mention of the grant of the patent: **16.08.2006**
(21) Application number: 99950909.4
(22) Date of filing: 14.10.1999
(51) Int. Cl.: B01J 8/10, B01J 8/08, C08F 10/00, B01F 7/04, B01F 15/06

(54) **PREPOLYMERISATION REACTOR**
PRÄPOLYMERISATIONSREAKTOR
REACTEUR DE PREPOLYMERISATION

(30) Priority: 14.10.1998 NO 984786
(43) Date of publication of application: 19.09.2001
(73) Proprietor: Borealis Technology Oy, 06101 Porvoo (FI)
(72) Inventor: BERGMANN, Fred Harald, N-3970 Langesund (NO); KORHONEN, Esa, Borealis Polymers Oy, 06101 Porvoo (FI)
(74) Representative: Campbell, Neil Boyd
(86) International application number: PCT/GB1999/003415
(87) International publication number: WO 2000/021656

(56) References cited:
- EP-A- 0 446 059
- WO-A-00/09264
- DE-A- 2 031 738
- US-A- 2 924 439
- US-A- 3 254 070
- PATENT ABSTRACTS OF JAPAN vol. 009, no. 104 (C-279), 8 May 1985 (1985-05-08) & JP 59 230010 A (CHISSO KK), 24 December 1984 (1984-12-24)

## Description

The present invention relates to a prepolymerisation reactor and a process for the catalysed prepolymerisation of olefin monomers in such a reactor.

The commercial production of polyolefins almost exclusively comprises continuous polymerisation processes in plants where the polymerisation is performed in a slurry or gas phase reactor. A typical continuous slurry process is carried out in a continuous pipe reactor forming a loop. A part of the obtained reaction mixture containing polymer is taken out from the loop reactor continuously or periodically through a discharge valve and introduced into a separator where the polymer is collected. In a gas phase reactor, the polymerisation is typically carried out in fluidized beds formed by polymerising polymer particles. This bed is kept in a fluidized state by circulating a gas flow from the top of the reactor to the bottom thereof. It is also known to prepare polymers via continuous multiphase processes where slurry reactors, such as loop reactors, are followed by one or more gas phase reactors, or where two or more gas phase reactors are used in series.

A problem with continuous processes is that the catalyst particles have differing residence times. Some catalyst particles will react with monomers for a long period of time, whereas other catalyst particles will flow straight through the reactor and be removed more or less unreacted. This may result in uneven product quality.

If a high yield polymerisation catalyst is introduced directly into a main olefin polymerisation reactor, which typically is working around 70°C, the reaction may start so fast that the catalyst particles break down resulting in the production of significant quantities of fines.

This may be avoided by subjecting the catalyst to prepolymerisation in a separate vessel or reactor before being introduced into the main reactor. Prepolymerisation reactors are usually much smaller than the main polymerisation reactor and are often operated at a temperature around 25°C. Some reactors work at higher temperatures, up to 70°C, but at low monomer concentrations to restrict the reaction rate. At such low temperatures and/or low monomer concentrations, the reaction rate will be slow and the catalyst particles will become "coated" with a small layer of polyolefin. The coating on the prepolymerised catalyst will slow down the reaction rate in the main reactor so the particles will not be broken down and fewer fines will be produced. In this way, the morphology of the obtained final polymer will be improved.

However, a problem with known prepolymerisation reactors is that a number of the catalyst particles in the prepolymerisation reactor have too short a residence time to be sufficiently coated, and in the main reactor they will then produce quantities of fines. However, the residence time should not be too long since this may result in uneven polymerisation in the main reactor. There still remains a need to design a prepolymerisation reactor capable of producing narrow residence times.

Prepolymerisation is typically carried out by contacting a solid catalyst component with a small amount of pure, olefin monomer or olefin monomer in a suitable diluent in a vessel separated from the main polymerisation reactor.

EP 0 279 153 discloses a prepolymerisation reactor which simply comprises a straight pipe having a diameter of not more than 10 mm and a volume of less than 1000 cm³. The catalyst components and propylene are fed separately to the pipe, and the mixture flows through the pipe directly into the main polymerisation reactor. This prepolymerisation reactor is operated typically at 30°C, and the residence time is preferably less than 2 s. The degree of polymerisation is preferably in the range of from 2 to 10 g/g by weight of polymer per weight of catalyst. The purpose of the prepolymerisation is to increase the efficiency of a Ziegler type catalyst in the polymerisation of olefins.

WO 97/33920 discloses an elongated vertical, water-jacketed olefin polymerisation reactor that also can be used as a prepolymerisation reactor. The reactor is provided with a central rotating shaft to which are attached plates dividing the reactor into a number of discrete compartments. Between each dividing plate and the inside wall of the reactor there is a slit of 1 to 25 mm, through which the reacting slurry inside the reactor is forced from one compartment to the next. The rotating shaft also bears mixing elements. The prepared prepplymerised catalyst slurry is then fed to a main polymerisation reactor.

WO 00/09264 describes a gas phase prepolymerisation reactor for use in the gas phase coating of polymerisation catalysts. The reactor does not comprise any baffles.

It has been found that the use of separator plates gives rise to operational problems associated with the formation of plugs or blockages in the small gaps between the separator plates and the inside wall of the reactor. The presence of blockages may cause the subsequent formation of lumps in the prepolymerisation slurry or the formation of hot spots within the reactor vessel. Moreover, the presence of divider plates results in a much broader residence time distribution pattern since whilst certain catalyst particles may pass smoothly through each reactor section, other particles may become "trapped" within segments during prepolymerisation and such particles inevitably have a greater residence time in the prepolymerisation reactor.

It has now been surprisingly shown that these problems may be alleviated by employing a prepolymerisation reactor formed from a single non-partitioned reaction chamber lined longitudinally with baffles to aid mixing. By employing an non-partitioned reaction chamber, the formation of lumps or blockages may be avoided and the residence time of catalyst particles within the reactor may be more carefully controlled yielding a much narrower residence time distribution pattern and hence better control of fines production in the main polymer reactor.

Thus, according to one aspect of the invention, there is provided a prepolymerisation reactor as claimed in claim 1 for the liquid phase polymerisation of olefin monomers in the presence of a catalyst.

Viewed from another aspect, the invention provides a process as claimed in claim 11 for the liquid phase polymerisation of olefin monomers in the presence of a catalyst, said process being performed in the prepolymerisation reactor as herein before defined, said process comprising introducing a monomer and catalyst into the reactor chamber.

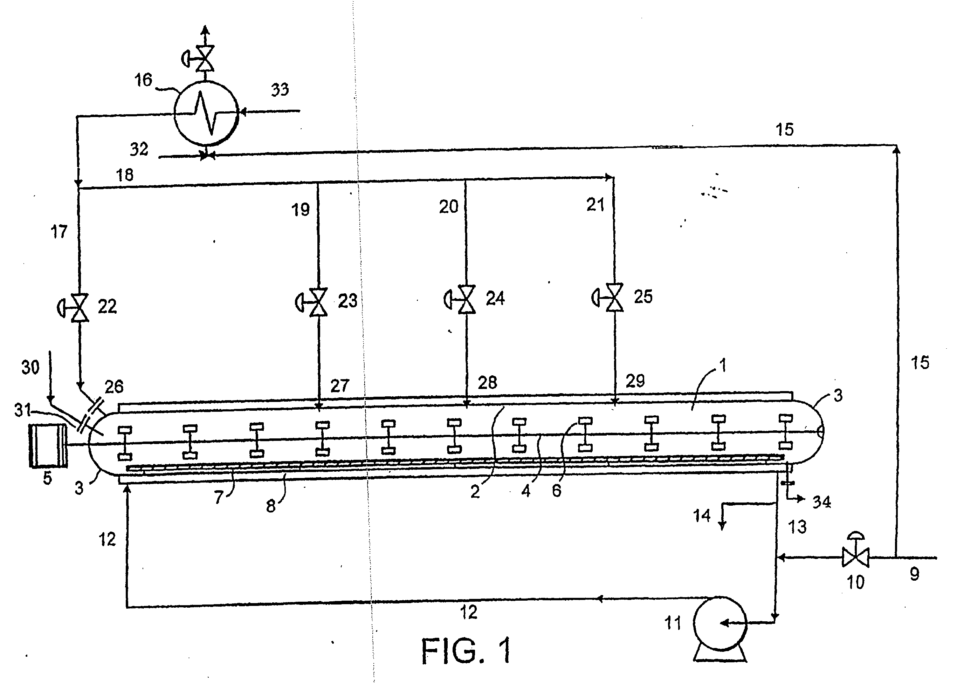

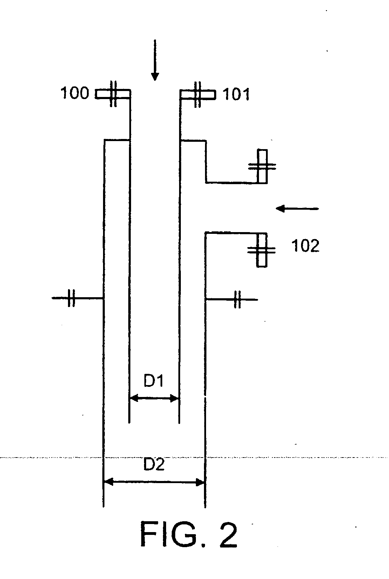

In the accompanying figures Fig. 1 is a schematic representation of the prepolymerisation reactor of the present invention, and Fig. 2 depicts a longitudinal cross section of a catalyst feeding device.

The prepolymerisation reactor of the present invention is non-partitioned; i.e. the area within the reaction chamber is free from separator or divider plates which would serve to impede the flow of the reaction mixture through the reaction chamber.

The ratio between the length and diameter of said reactor chamber is from 4:1 to 15:1, preferably 6:1 to 13:1, more preferably 8:1 to 11:1, especially 10:1.

The prepolymerisation reactor is equipped with a shaft which preferably extends through the centre of the reaction chamber. In a further preferred embodiment, the shaft extends through and outside the reactor chamber. The shaft is preferably rotated and this may be achieved by any suitable means, such as an electrical motor. Other suitable means of rotation will of course be obvious to the person skilled in the art.

To the shaft are fixed impellers which rotate with the shaft and these are designed to improve the heat transfer through the reactor wall and to keep the catalyst and polymer particles distributed in the reactor chamber. The impellers also serve to convey the mixture from the first end wall to the second end wall of the reaction chamber and to ensure the feed inlets remain open. By carefully arranging the impellers at differing angles various flow patterns may be achieved within the reaction chamber.

The impellers in the first end of the reactor nearest the catalyst feed inlet are preferably arranged to convey the mixture from the first end wall to the second end wall of the reaction chamber and may also equalise variations in the catalyst dosage. This conveyance may be achieved by arranging the impellers at an angle to the longitudinal axis of the reactor such that the reaction mixture flows towards the second end wall. These impellers promote transportation of the reaction mixture along the axis of the reactor thus helping to ensure the feed inlets remain open. In an advantageous embodiment, those impellers in the first half, especially the first third, more especially the first eighth of the reactor chamber nearest the catalyst inlet are arranged to convey the mixture from the first end wall to the second end wall of the reaction chamber.

Throughout the rest of the reactor the impellers are preferably arranged to try to ensure plug flow through the reactor chamber thereby ensuring a controllable and narrow residence time distribution. These impellers ensure that the reaction slurry is well mixed and that heat is dispersed in the reaction chamber.

Impellers may be unevenly spaced but are preferably evenly spaced along the shaft and are conveniently arranged opposite each other in pairs. The impellers may be of any convenient shape, e.g. paddle shaped.

The content of the reactor chamber is conveyed forward in the longitudinal direction through the reactor chamber due to positive mass flow and impeller rotation, and optionally due to gravitation in a vertical embodiment of the present prepolymerisation reactor.

The reactor of the invention ensures that all catalyst particles will have a sufficient residence time within the reactor to obtain a minimum polymerisation degree of at least 10 parts by weight of polymer per 1 part by weight of catalyst, which is generally recognised as sufficient. In the embodiments described below polymerisation degrees of 294 and 385 are obtained.

The number of impellers attached to the shaft will of course depend on the dimensions of the reactor vessel but may conveniently be between 6 and 40. The size of each impeller blade may be varied again depending on the dimensions of the reactor vessel although conveniently, the diameter of the impeller, i.e the part of the vessel diameter the impeller will cover with one axle rotation is approximately 0.4 to 0.75. This distance is of course equivalent to two times the distance from the shaft to impeller tip.

The impellers may be of other orientations or sizes as long as the desired mixing and residence time effects are obtained. Such tailoring of impellers will be readily achieved by the person skilled in the art. It is preferred if the catalyst particles have a residence time long enough to obtain a polymerisation degree of not less than 10. In practice, suitable residence times are between 5 to 50 minutes, especially 10 to 20 minutes.

The prepolymerisation reactor of the invention comprises baffles which are fixed to the longitudinal inside walls of the reactor. The baffles are installed substantially in parallel to the longitudinal direction of the reactor chamber and are preferably equally spaced circumferentially and preferably extend substantially along the whole length of the inside surface of the reactor chamber. The number of baffles may be varied, but at least one baffle must be present, preferably at least two, more preferably three or more baffles. Each baffle covers a certain proportion of the circumference of the reactor chamber. For example, if there are three baffles each baffle may extend around 120° of the circumference of the reactor.

The baffles preferably have a height of about D/12, where D is the internal diameter of the reactor chamber. There is a certain clearance between the inside surface of the reactor walls and the baffles (except for the fastening points), which may typically range from 5 to 20 mm. In a most preferred embodiment there are four baffles.

The prepolymerisation reactor preferably has separate catalyst and monomer feed inlets. Whilst it is possible to combine these inlets it is easier to control the feeds if the catalyst and monomer supplies are kept separate. Preferably, at least one monomer feed inlet is positioned in the first end wall of the reaction chamber. However, in a most preferred embodiment monomer may be feed into the reaction chamber at various points along the longitudinal reactor walls. The number of longitudinal wall monomer feeds will depend on the three. In an especially preferred embodiment, monomer is fed into the reactor via monomer feeds in the first end wall and the longitudinal wall. By feeding monomer into the reactor through longitudinally positioned feeds temperature control inside the reactor may be improved.

Suitable monomers include ethylene, propene and other olefins and are of course well known to the skilled person. The monomers to be added to the prepolymerisation reactor of the invention may optionally be premixed with a diluent.

The catalyst feed inlet is preferably located in the first end wall of the reactor vessel. Catalysts used in the polymerisation of the above mentioned types of monomers, in particular ethylene and propylene, optionally in mixtures with other olefins, include traditional catalysts, such as the Ziegler-Natta type catalysts, metallocenes, etc.

The catalyst feed comprises all catalyst species active in the polymerisation process and will usually be fed to the reactor in the form of a solution or suspension in an appropriate inert liquid. The catalyst feed may be mixed with monomer and/or a diluent, and then introduced into the prepolymerisation reactor through a separate catalyst inlet opening in a first end of the reactor chamber.

In a preferred embodiment, a catalyst dosage device is positioned in the catalyst feed inlet opening. The device may consist of two concentric pipes, an outer pipe and a smaller pipe. Catalyst is fed through the inner pipe, while a diluent, a monomer, or a combination thereof, is fed through pipe into the annular volume between the two pipes.

In a particularly preferred embodiment of the catalyst feeding device, the outer pipe has a diameter D2 = 10 mm and the inner pipe a diameter D1 = 5 mm. These dimensions are found suitable for various feeding capacities from 0.3 to 1, preferably from 0.4 to 0.8 kg/h of the catalyst, which is conveyed to the reactor with about 320 kg/h of propane. However, it is generally possible to feed 0.3 to 20, preferably 0.4 to 15 kg/h of catalyst into the prepolymerisation reactor. Clearly, where the catalyst feed is greater than 1 kg/h then a larger catalyst feeding device than the one described above will need to be employed. The catalyst feeding rate should be kept constant during steady state operations.

The polymerisation reactor preferably has an outlet opening positioned in the second end wall of the reactor chamber for discharging the reaction slurry.

The present prepolymerisation reactor is provided with a jacket for temperature control, enveloping the reactor chamber along its entire length. Through this jacket, a medium of regulated temperature is circulated to control the temperature of the content of the reactor chamber. The temperature inside the reactor is controlled by regulating the temperature of the cooling medium, the monomer feed temperature and feed amount to the different dosage points. In this way, the reactor of the present invention allows a good temperature control. Temperatures in the reaction mass from typically -20°C to +80°C can be obtained. It is also possible to control the temperature within the reaction chamber by controlling the temperature of the monomer and optionally diluent feed and this forms a further aspect of the invention. The monomer feed may be cooled or heated in a heat exchanger prior to administration into the reactor chamber to a suitable temperature, for example from 10°C to 60°C.

The reactor of the present invention is designed particularly for the suspension prepolymerisation of olefin monomers in the presence of a catalyst and is preferably orientated horizontally. In general, the prepolymerisation reactor will be positioned upstream of a main polymerisation reactor and integrated in line therewith. The obtained prepolymerised reaction mixture, containing active catalyst particles coated with polymer, will therefrom be fed directly into the main reactor and will usually provide the entire need for catalysts in the main polymerisation reactor. The present prepolymerisation reactor is equally well suited for all types of olefins and is also suitable for use together with all commercial sized reactors suited for the catalytic polymerisation of olefins in suspension.

The purpose of performing a prepolymerisation is to provide the catalyst particles with a coating of polymer. This coating does not necessarily need to be made up entirely of the olefins that are polymerised in the main reactor. Thus, the present reactor may be operated as a separate unit independent of the downstream main polymerisation reactors.

The commercially volumetric greatest polyolefins are those produced by catalytic polymerisations of olefins containing 2 to 8 carbon atoms. Examples of such polyolefins include high density polyethylene (HDPE), linear low density polyethylene (LLDPE), polypropylene (PP), ethylene propylene diene monomers (EPDM) and copolymers of ethylene or propylene with higher olefins. The present prepolymerisation reactor can advantageously be used in connection with all such polymerisations.

The invention shall now be explained in more detail with reference to the accompanying figures. In Fig. 1 the polymerisation reactor chamber denoted by numeral 1 has a cylindrical elongated shape that is defined by inside surfaces 2 and end walls 3. The end wall plates as depicted are of a spherical form, but may be given any suitable design, for example flat. The reactor has a length/diameter ratio of from 4:1 to 15:1, preferably about 10:1. The reactor is equipped with a central shaft 4 extending out of the reactor chamber 1. The shaft 4 is rotated by any suitable means 5, such as an electrical motor. To the shaft is fixed a number of impellers 6 to rotate with the shaft 4. Baffles 7 are fixed to the longitudinal inside walls 2 of the reactor 1.

The temperature in the reaction medium inside the reactor chamber 1 can be controlled by a cooling jacket 8, which preferably entirely surrounds the longitudinal walls 2 of the reactor chamber 1. Cooling medium is fed to the jacket 8 from a reservoir by a line 9, passing a valve 10 and conveyed further by a pump 11 to a line 12, and it exits the cooling jacket 8 by line 13. The cooling medium can be removed from the system by line 14, or recycled via pump 11 to line 12. The cooling loop will include the circulation pump 11 and optionally one or more heat exchangers (not shown) to cool the medium before it again enters the cooling jacket 8. If desired, the cooling loop may be divided into two or more separate cooling loops operated together or individually. A line 15 branched off from line 9 feeds cooling medium to a heat exchanger 16 to cool the monomer feed 33. Optionally, the heat exchanger 16 may be heated with steam or some other heating medium 32 to heat the feed 33.

The monomer is fed from a reservoir by line 33 passing through the heat exchanger 16 to the monomer feed line 17 and inlet point 26 in the reactor wall. Optionally, a line 18 may be branched off from line 33 conveying parts of the monomer feed to lines 19, 20 and 21 to be introduced into the reactor in specific inlet points 27, 28 and 29 along the reactor length. The flow rates of the monomer feed in lines 17, 19, 20 and 21 are regulated with regulating valves 22 to 25. In general, the main part of the monomer feed is fed by line 17 into the reactor through the main monomer inlet opening 26.

The catalyst is fed by line 30 into the reactor chamber through inlet opening 31 and polymer slurry removed through outlet 34. A catalyst dosage device positioned in the catalyst feed inlet opening 31 is shown in Fig. 2. The device 100 consists of two concentric pipes, an outer pipe 102 and a smaller pipe 101. Catalyst is fed through the inner pipe 101, while a diluent, a monomer, or a combination thereof, is fed through pipe 102 into the annular volume between the two pipes.

The prepolymerisation slurry is directly introduced into a commercial polymerisation reactor and may continuously supply the total quantity of prepolymerised catalyst needed. Consequently, the capacity of the prepolymerisation reactor has to be adapted to the capacity of the commercial reactor, and based on the general description above it can be scaled according to desire.

The prepolymerisation reactor of the present invention will now be further illustrated and explained by way of embodiments of prepolymerisation reactors adapted to various commercial polymerisation reactor capacities. As an example we will use the suspension polymerisation of propylene into homopolymers using a common Ziegler-Natta catalyst.

Even if all embodiments of the prepolymerisation reactors described are in relation to a vessel positioned horizontally, the same principles will also apply to the prepolymerisation reactor in a vertical position, or in any inclined position.

### Examples

### Example 1 Polypropylene prepolymerisation reactor producing 235 kg/h.

A prepolymerisation reactor having a length of 5 m and an internal diameter of 0.5 m is used. The monomer feed comprises 95% of propylene and 5 % of propane. The feeding rate is 2750 kg/h. The feed is cooled to about 10°C in the heat exchanger 16. To obtain a balanced polymerisation rate along the reactor length a major part of the feed (2000 kg/h) is fed to the reactor by line 17, while minor quantities of 250 kg/h are fed by each of the feeding lines 19, 20 and 21 into the reactor.

An amount of 0.8 kg/h of a common Ziegler-Natta catalyst suspended in a minor amount of solvent (for instance heptane, propane or a mineral oil) is fed to the catalyst dosage device in the inner pipe 101. In the outer pipe 102 an amount of 320 kg/h of propane is introduced and the catalyst and propane mix is fed to the prepolymerisation reactor through the catalyst feed inlet opening 31. The shaft 4 with the impellers 6 is rotated with a speed adequate to keep solids in suspension and to maximise heat transfer to cooling jacket 8. The average catalyst residence time with the chosen conditions is 11.4 minutes. The output of polypropylene is 235 kg/h. The polymerisation degree is then: 235/0.8=294, which corresponds to about 1% by weight of the polymerisation capacity of the downstream main reactor. The obtained prepolymerisation slurry containing the catalyst coated with polypropylene as well as unreacted propylene and inert propane is continuously fed directly into the main reactor which is producing about 24 t/h.

The temperature of the reaction medium inside the prepolymerisation reactor chamber is maintained within a temperature range of 10 ± 1°C by circulating a cooling medium in the jacket 8 keeping the temperature of the cooling jacket at 5.6°C. The temperature of the introduced monomer feed is 10°c and the resulting polymerisation slurry discharged from the reactor chamber through the outlet opening 28 is fed directly to the main reactor without any further cooling.

### Example 2 Polypropylene prepolymerisation reactor producing 154 kg/h.

A prepolymerisation reactor having a length of 5 m and a length/diameter ratio of 10 is used. In this case the monomer feed comprises 80% of propylene and 20% of propane, having a temperature of 10°C. The feeding rate is 1000 kg/h by line 17 to the main monomer feed inlet point 26, and 133 kg/h by each of lines 19, 20 and 21 in inlet points 27, 28 and 29, respectively, total 1400 kg/h. A common Ziegler-Natta catalyst is introduced into the reactor in an amount of 0.4 kg/h, mixed with 320 kg/h of propane, as described in example A. The shaft 4 is rotated with a speed adequate to keep solids in suspension and to maximise heat transfer to cooling jacket 8. The average catalyst residence time with the chosen conditions is 20 min. The output of prepolymerised polypropylene is 154 kg/h, which corresponds to a polymerisation degree of 385 (154/0.4). The resulting slurry with a composition as disclosed above, is continuously fed directly into the main reactor which is producing about 15 t/h. The temperature conditions are as explained in Example 1.

### Example 3 Polypropylene prepolymerisation reactor producing 135 kg/h.

A prepolymerisation reactor having a length of 5 m and an internal diameter of 0.5 m is used. The monomer feed comprises 20% of propylene and 80% of propane. The feeding rate is 4000 kg/h. The feed is heated to about 60°C in the heat exchanger 16. To obtain a balanced polymerisation rate along the reactor length a major part of the feed (3000 kg/h) is fed to the reactor by line 17, while minor quantities of 333 kg/h are fed by each of the feeding lines 19, 20 and 21 into the reactor.

An amount of 0.8 kg/h of a common Ziegler-Natta catalyst suspended in a minor amount of solvent (for instance heptane, propane or a mineral oil) is fed to the catalyst dosage device in the inner pipe 101. In the outer pipe 102 an amount of 250 kg/h of propane is introduced and the catalyst and propane mix is fed to the prepolymerisation reactor through the catalyst feed inlet opening 31. The shaft 4 with the impellers 6 is rotated with a speed adequate to keep solids in suspension and to maximise heat transfer to cooling jacket 8. The average catalyst residence time with the chosen conditions is 8.1 minutes. The output of polypropylene is 135 kg/h. The polymerisation degree is then 135/0.8 = 169, which corresponds to about 0.7% by weight of the polymerisation capacity of the downstream main reactor. The obtained polymerisation slurry containing the catalyst coated with polypropylene as well as unreacted propylene and inert propane is continuously fed directly into the main reactor which is producing about 25 t/h.

The temperature of the reaction medium inside the prepolymerisation reactor chamber is maintained within a temperature range of 60 ± 1°C by circulating a cooling medium in the jacket 8 keeping the temperature of the cooling jacket at 50°C. The temperature of the introduced monomer feed is 60°C and the resulting polymerisation slurry discharged from the reactor chamber through the outlet opening 28 is fed directly to the main reactor without any further cooling.

## Claims

1. A prepolymerisation reactor for the liquid phase polymerisation of olefin monomers in the presence of a catalyst, comprising
a substantially cylindrical reactor chamber having a circumferential, longitudinal reactor wall, a first end wall and a second end wall, the ratio between the length and diameter of said reactor chamber being from 4:1 to 15:1 said chamber being free from separator or divider plates which would serve to impede the flow of the reaction mixture through the reaction chamber;
a jacket for temperature control, said jacket substantially enveloping said longitudinal reactor wall;
a shaft positioned in the reactor chamber, which shaft is provided with impellers;
a monomer feed inlet opening;
a catalyst feed inlet opening;
an outlet opening; and
at least one baffle positioned substantially longitudinally within said reactor chamber.

2. The prepolymerisation reactor of claim 1 wherein the monomer and catalyst feed inlets are positioned in the first end wall.

3. The prepolymerisation reactor of claim 1 or 2 wherein the outlet opening is positioned in the second end wall.

4. The prepolymerisation reactor of any one of claims 1 to 3, wherein the impellers in a first third of said reactor chamber nearest the catalyst feed inlet opening are adapted to convey a reaction mixture from the first end wall to the second end wall.

5. The prepolymerisation reactor of claim 4, wherein the impellers in the remaining two thirds of said reactor chamber are arranged to mix a reaction mixture.

6. The prepolymerisation reactor of any one of claims 1 to 5, wherein the reaction chamber comprises at least two baffles substantially evenly spaced circumferentially.

7. The prepolymerisation reactor of any one of claims 1 to 6, wherein said at least one baffle is provided at a distance of from 5 to 20 mm from said longitudinal reactor wall.

8. The prepolymerisation reactor of any one of claims 1 to 7, having a length/diameter ratio of 10:1.

9. The prepolymerization reactor of any one of claims 1 to 8, further comprising at least one additional monomer feed inlet opening in said longitudinal reactor wall.

10. A prepolymerisation reactor as claimed in any one of claims 1 to 9 horizontally positioned.

11. A process for the prepolymerisation of olefins in a prepolymerisation reactor as claimed in any one of claims 1 to 10 comprising the step of feeding olefin monomer into said reactor through said monomer feed inlet opening, the temperature of the monomer feed being adjusted to alter the temperature within the reactor chamber.

## Patentansprüche

1. Vorpolymerisationsreaktor für die Flüssigphasenpolymerisation von Olefinmonomeren in Gegenwart eines Katalysators, umfassend:
eine im wesentlichen zylindrische Reaktorkammer mit einer Reaktorlängswand entlang des Umfangs, einer ersten Seitenwand und einer zweiten Seitenwand, wobei das Verhältnis zwischen Länge und Durchmesser der Reaktorkammer 4:1 bis 15:1 beträgt, wobei die Kammer frei von Separator- oder Trennplatten ist, die dazu dienen würden, den Strom des Reaktionsgemischs durch die Reaktorkammer zu behindern;
einen Mantel für die Temperatursteuerung, wobei dieser Mantel die Längswand des Reaktors im wesentlichen umhüllt;
einen Schaft, der sich in der Reaktorkammer befindet, wobei dieser Schaft mit Flügelrädern versehen ist;
eine Einlaßöffnung für die Monomerzufuhr;
eine Einlaßöffnung für die Katalysatorzufuhr;
eine Auslaßöffnung; und
zumindest eine Prallfläche, die im wesentlichen in Längsrichtung in der Reaktorkammer angeordnet ist.

2. Vorpolymerisationsreaktor nach Anspruch 1, wobei sich die Einlässe für die Monomer- und Katalysatorzufuhr in der ersten Seitenwand befinden.

3. Vorpolymerisationsreaktor nach Anspruch 1 oder 2, wobei sich die Auslaßöffnung in der zweiten Seitenwand befindet.

4. Vorpolymerisationsreaktor nach einem der Ansprüche 1 bis 3, wobei die Flügelräder in einem ersten Drittel dieser Reaktorkammer, das der Einlaßöffnung für die Katalysatorzufuhr am nächsten ist, so gestaltet sind, daß sie das Reaktionsgemisch von der ersten Seitenwand zur zweiten Seitenwand befördern.

5. Vorpolymerisationsreaktor nach Anspruch 4, wobei die Flügelräder in den restlichen zwei Dritteln dieser Reaktorkammer so angeordnet sind, daß sie das Reaktionsgemisch vermengen.

6. Vorpolymerisationsreaktor nach einem der Ansprüche 1 bis 5, wobei die Reaktorkammer mindestens zwei Prallflächen aufweist, die entlang des Umfangs im wesentlichen im gleichen Abstand sind.

7. Vorpolymerisationsreaktor nach einem der Ansprüche 1 bis 6, wobei die zumindest eine Prallfläche in einem Abstand von 5 bis 20 mm zur Längswand des Reaktors vorgesehen ist.

8. Vorpolymerisationsreaktor nach einem der Ansprüche 1 bis 7, der ein Verhältnis von Länge/Durchmesser von 10:1 hat.

9. Vorpolymerisationsreaktor nach einem der Ansprüche 1 bis 8, der ferner zumindest eine zusätzliche Einlaßöffnung für die Monomerzufuhr in der Längswand des Reaktors aufweist.

10. Vorpolymerisationsreaktor nach einem der Ansprüche 1 bis 9, der waagerecht angeordnet ist.

11. Verfahren zum Vorpolymerisieren von Olefinen in einem Vorpolymerisationsreaktor nach einem der Ansprüche 1 bis 10, das den Schritt umfaßt, bei dem Olefinmonomer durch die Einlaßöffnung für die Monomerzufuhr in den Reaktor eingeführt wird, wobei die Temperatur der Monomerzufuhr eingestellt wird, um die Temperatur in der Reaktorkammer zu ändern.

## Revendications

1. Réacteur de pré-polymérisation pour la polymérisation en phase liquide de monomères d'oléfines en présence d'un catalyseur, comprenant
une chambre de réacteur pratiquement cylindrique ayant une paroi de réacteur longitudinale circonférentielle, une première paroi d'extrémité et une deuxième paroi d'extrémité, le rapport entre la longueur et le diamètre de ladite chambre de réacteur étant de 4/1 à 15/ 1, ladite chambre étant exempte de plaques de séparation ou de division qui serviraient à entraver le flux du mélange réactionnel à travers la chambre de réaction ;
une chemise pour contrôler la température, ladite chemise enveloppant pratiquement ladite paroi de réacteur longitudinale ;
un arbre positionné dans la chambre de réacteur, lequel arbre est pourvu de pales ;
un orifice d'entrée de charge de monomères ;
un orifice d'entrée de charge de catalyseur ;
un orifice de sortie ; et
au moins une chicane positionnée pratiquement longitudinalement à l'intérieur de ladite chambre de réacteur.

2. Réacteur de prépolymérisation selon la revendication 1, dans lequel les entrées de charge de monomère et de catalyseur sont positionnées dans la première paroi d'extrémité.

3. Réacteur de prépolymérisation selon la revendication 1 ou 2, dans lequel l'orifice de sortie est positionné dans la deuxième paroi d'extrémité.

4. Réacteur de prépolymérisation selon l'une quelconque des revendications 1 à 3, dans lequel les pales dans un premier tiers de ladite chambre de réacteur le plus proche de l'orifice d'entrée de charge de catalyseur sont adaptées pour convoyer un mélange réactionnel allant de la première paroi d'extrémité à la seconde paroi d'extrémité.

5. Réacteur de prépolymérisation selon la revendication 4, dans lequel les pales dans les deux tiers restants de ladite chambre de réacteur sont agencées de façon à mélanger un mélange réactionnel.

6. Réacteur de prépolymérisation selon l'une quelconque des revendications 1 à 5, dans lequel la chambre de réaction comprend au moins deux chicanes espacées pratiquement uniformément de façon circonférencielle.

7. Réacteur de prépolymérisation selon l'une quelconque des revendications 1 à 6, dans lequel ladite au moins une chicane est disposée à une distance de 5 à 20 mm par rapport à ladite paroi de réacteur longitudinale.

8. Réacteur de prépolymérisation selon l'une quelconque des revendications 1 à 7, ayant un rapport longueur/diamètre de 10/1.

9. Réacteur de prépolymérisation selon l'une quelconque des revendications 1 à 8, comprenant en outre au moins un orifice d'entrée de charge de monomère supplémentaire dans ladite paroi de réacteur longitudinale.

10. Réacteur de prépolymérisation selon l'une quelconque des revendications 1 à 9, positionné horizontalement.

11. Procédé pour la prépolymérisation d'oléfines dans un réacteur de prépolymérisation tel que revendiqué dans l'une quelconque des revendications 1 à 10, comprenant l'étape d'introduction d'un monomère d'oléfine dans ledit réacteur par l'intermédiaire dudit orifice d'entrée de charge de monomère, la température de la charge de monomère étant ajustée de manière à altérer la température à l'intérieur de la chambre de réacteur.
